Europäisches Patentamt

**European Patent Office**

**Office européen des brevets**

(19)

(11) Numéro de publication: **0 017 549**

**A2**

(12)

# DEMANDE DE BREVET EUROPEEN

(21) Numéro de dépôt: **80400380.4**

(22) Date de dépôt: **21.03.80**

(51) Int. Cl.³: **F 15 B 11/16**

(30) Priorité: **05.04.79 FR 7908659**

(43) Date de publication de la demande:
**15.10.80 Bulletin 80/21**

(84) Etats Contractants Désignés:
**BE DE GB IT SE**

(71) Demandeur: **POCLAIN**

**F-60330 Le Plessis-Belleville(FR)**

(72) Inventeur: **Fillion, Pierre Christian**
**203, Chaussée de Pontpoint Pontpoint**
**F-60700 Pont Sainte-Maxence(FR)**

(74) Mandataire: **Hoisnard, Jean-Claude et al,**
**Cabinet Beau de Lomenie 55, rue d'Amsterdam**
**F-75008 Paris(FR)**

(54) **Circuit de transmission de puissance par fluide sous pression.**

(57) L'invention est relative à un circuit hydraulique de puissance comprenant deux récepteurs 3, 4 alimentés chacun par une pompe 1, 2, un limiteur de débit 22 étant disposé sur le conduit commun 25 de retour des circuits des récepteurs et étant piloté par une pression, fonction des pressions dans les conduits d'alimentation, au moyen d'un dispositif de pilotage.

Ce dispositif de pilotage comprend deux restrictions 27, 28 disposées entre les conduits d'alimentation 7, 8 et l'organe de commande 22*b* du limiteur de débit 22.

Une application est la réalisation du circuit de commande d'une pelle hydraulique.

./...

EP 0 017 549 A2

## Circuit de transmission de puissance par fluide sous pression.

On connaît des circuits de transmission de puissance par fluide sous pression, dans lesquels deux moteurs sont alimentés par des pompes distinctes. Afin d'éviter les survitesses, on dispose sur les conduits d'échappement des limiteurs de débit dont l'ouverture est pilotée par la pression des conduits d'alimentation.

On sait également munir les deux moteurs d'un conduit d'échappement commun et placer sur ce conduit commun un seul limiteur de débit dont l'ouverture est alors pivotée par une pression, fonction des pressions des conduits d'alimentation. Selon l'art antérieur, la fonction est telle que la pression de pilotage est la plus grande des pressions des conduits d'alimentation, la réalisation de cette fonction étant assurée par un clapet navette, généralement à bille, disposé sur un conduit de liaison des conduits d'alimentation. Cette disposition fonctionne de manière satisfaisante, mais présente, cependant les inconvénients, d'une part, correspondant au coût relativement important du clapet navette, d'autre part, à l'usure de ce clapet navette due à la présence de pièces mobiles.

L'invention entend remédier à cet état de choses en proposant une disposition fonctionnant au moins aussi bien que celle déjà connue mais qui, en outre, est moins coûteuse, plus résistante, notamment à l'usure, et permet des réglages avantageux en service.

L'invention est donc relative à un circuit de transmission de puissance au moyen d'un fluide sous pression, comprenant :

- une première et une deuxième source de fluide sous pression,

- un premier et un deuxième récepteur, reliés auxdites pompes, le premier récepteur à la première pompe, et, le deuxième récepteur à la deuxième pompe, par des premier et deuxième conduits d'alimentation distincts,

- un conduit d'échappement commun aux deux récepteurs,

2

- un limiteur réglable de débit, disposé sur ce conduit d'échappement commun, et,

- un dispositif de pilotage de l'ouverture du limiteur de débit, qui est raccordé, d'une part, aux conduits d'alimentation des deux récepteurs, d'autre part, à l'organe de commande de l'ouverture du limiteur de débit.

Ce dispositif de pilotage de l'ouverture du limiteur de débit est constitué par des premier et deuxième conduits de raccordement qui relient, respectivement, les premier et deuxième conduits d'alimentation à l'organe de commande de l'ouverture du limiteur de débit, et, par des première et deuxième restrictions, qui sont disposées sur les premier et deuxième conduits de raccordement, respectivement.

De manière préférée, chacun des premier et deuxième conduits de raccordement est constitué par un tronçon distinct de l'autre conduit de raccordement, raccordé au conduit d'alimentation correspondant, et par un tronçon commun aux deux conduits de raccordement, qui relie les deux tronçons distincts à l'organe de commande de l'ouverture du limiteur de débit, cependant que les première et deuxième restrictions sont disposées, chacune, sur l'un et l'autre desdits tronçons distincts, respectivement.

L'invention sera mieux comprise, et des caractéristiques secondaires et leurs avantages apparaîtront au cours de la description d'une réalisation donnée ci-dessous à titre d'exemple.

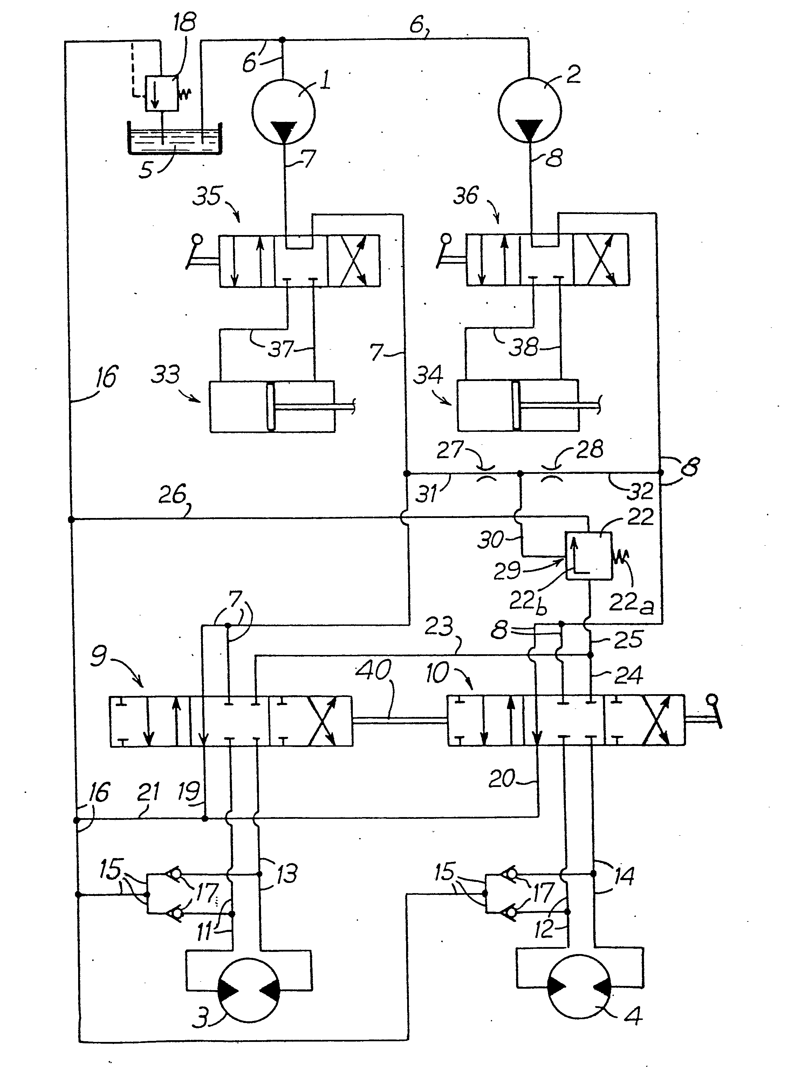

Il est entendu que la description et le dessin ne sont donnés qu'à titre indicatif et non limitatif.

Il sera fait référence au dessin annexé dans lequel la figure unique représente schématiquement un circuit hydraulique conforme à l'invention.

La figure unique représente donc une transmission hydraulique de puissance destinée à l'alimentation respectivement par les pompes 1 et 2 des groupes de récepteurs 3 et 4. En l'espèce, chaque groupe 3, 4 est constitué par les moteurs hydrauliques d'entraînement des roues d'un véhicule. On conçoit d'ailleurs très bien l'application de l'invention à l'entraînement des chenilles d'un véhicule à chenilles, ou à la commande de récepteurs, autres que des moteurs.

Les pompes 1 et 2 sont reliées à un réservoir 5 de fluide par leur conduit d'aspiration 6. Des pompes 1 et 2 partent des conduits de refoulement 7 et 8, qui aboutissent à des distributeurs 9 et 10 à trois positions. Enfin, deux conduits 11 et 13 relient l'admission et le refoulement du groupe de moteurs 3 au distributeur 9, tandis que d'une manière analogue, deux conduits 12 et 14 relient l'admission et le refoulement du groupe de moteurs 4 au distributeur 10.

Des conduits 15 relient les conduits 11, 12, 13 et 14 à un conduit 16 qui aboutit au réservoir 5, avec interposition de clapets de non-retour 17 permettant au fluide de ne s'écouler que dans le sens d'un remplissage éventuel complémentaire des conduits 11 à 14 par le fluide des conduits 15 et 16. Le conduit 16 constitue en fait la canalisation générale de retour du fluide au réservoir 5 et débouche dans ledit réservoir 5 avec interposition d'un clapet de décharge taré 18.

Par ailleurs, deux conduits 19 et 20, disposés en aval des distributeurs 9 et 10, relient respectivement lesdits distributeurs à un conduit 21, qui débouche dans le conduit 16.

En amont des distributeurs 9 et 10 est disposé un limiteur de débit 22, qui est relié aux distributeurs par des conduits 23 et 24 débouchant en fait dans ce limiteur de débit 22 par un conduit commun 25, qui se prolonge au-delà du limiteur 22 par un conduit 26 débouchant dans le conduit 16. Deux restrictions 27 et 28 sont disposées sur des conduits 31 et 32 raccordés aux conduits 7 et 8, respectivement, et également raccordés tous deux à un conduit 30, lui-même raccordé (29) à l'organe 22b de commande de l'ouverture du limiteur de débit 22. A noter que les effets de la pression du fluide du conduit 30 et d'un ressort de rappel 22a de l'organe de commande d'ouverture 22b sur cet organe de commande d'ouverture 22b sont antagonistes, le limiteur de débit 22 étant disposé dans sa configuration d'obturation au moins partielle des conduits 25 et 26 lorsque l'effet du ressort 22a est prédominant.

Enfin, un récepteur supplémentaire, ou un groupe de récepteurs, peut être alimenté par la pompe 1, cependant que la pompe 2 peut, également, s'il y a nécessité, alimenter un autre récepteur.

Dans la transmission représentée, un vérin supplémentaire par pompe est susceptible d'être alimenté, le vérin 33 par la pompe 1, et le vérin 34 par la pompe 2. Des distributeurs 35 et 36 à trois positions, intercalés sur les conduits 7 et 8 et reliés aux vérins 33, 34 par des conduits 37, 38, permettent au choix, d'alimenter dans un sens, ou dans l'autre, les vérins 33, 34, ou encore, de ne pas alimenter lesdits vérins.

En ce qui concerne la transmission représentée relative à l'entraînement des roues d'un véhicule, il est nécessaire d'entraîner lesdites roues dans le même sens. C'est la raison pour laquelle les tiroirs des distributeurs 9 et 10 sont liés, par une tige 40 par exemple, ce qui permet de les placer simultanément dans des positions compatibles.

La transmission décrite ci-avant permet de résoudre le problème de l'alimentation d'un récepteur supplémentaire, tel qu'un vérin 33, ou 34, sans perturbation du fonctionnement des deux groupes de récepteurs 3 et 4.

Les trois positions des distributeurs 9 et 10 correspondent :

- la première position, à l'obturation des conduits 19 et 20, et, aux mises en communication des conduits 7 et 11, des conduits 13 et 23, des conduits 8 et 12, et, des conduits 14 et 24 ;

- la deuxième position, à l'obturation des conduits 11, 12, 13, 14, 23 et 24, et, aux mises en communication des conduits 7 et 19, et, des conduits 8 et 20 ; et,

- la troisième position, à l'obturation des conduits 19 et 20, et, aux mises en communication des conduits 11 et 23, des conduits 7 et 13, des conduits 12 et 24, et, des conduits 8 et 14.

On examinera d'abord le fonctionnement obtenu dans la position des distributeurs 9, 10, 35 et 36, représentée sur la figure, ou position neutre (deuxième position des distributeurs 9 et 10). Le fluide aspiré dans le réservoir 5 par le conduit 6, et la pompe 1 est refoulé dans les conduits 7 et 19, et par les conduits 21 et 16, fait retour au réservoir 5. Les distribureurs 9 et 35 étant en position neutre ne dirigent le fluide, ni vers le groupe de moteurs 3, ni vers le récepteur supplémentaire, qui est le vérin 33. Ce qui précède s'applique par ailleurs entièrement à la deuxième partie de la transmission constituée par la pompe 2, le groupe de moteurs 4, le vérin 34 et les distributeurs 10 et 36.

Plaçant maintenant les distributeurs 9 et 10 dans leur première position, on met en communication les conduits 7 et 11, et, 8 et 12. Les pompes 1 et 2 ont été choisies initialement pour avoir des débits, qui conduisent à des entraînements conjugués des groupes de moteurs 3 et 4 pour assurer une propulsion équilibrée du véhicule par des vitesses linéaires égales des roues correspondant aux groupes 3 et 4. Il résulte de cette conformation et de la position des distributeurs que les pressions du fluide dans les conduits d'admission 7 et 8 sont généralement sensiblement égales.

Si le véhicule est en déplacement sur terrain plat, ou en montée, les moteurs 3 et 4 fonctionnent effectivement aux moteurs, de sorte que la pression du fluide dans au moins un des deux conduits 7, 8 est grande. La pression dans le conduit 30, qui a une valeur intermédiaire entre les pressions du fluide contenu dans les conduits 7 et 8, du fait des pertes de charge dues à la présence des restrictions 27 et 28, a une valeur suffisante pour pousser l'organe de commande 22b de l'ouverture du limiteur de débit 22 et avoir un effet prédominant celui du ressort de rappel 22a. La communication entre les conduits 25 et 26 est établie, sans limitation de débit. Le limiteur 22 n'agit donc pas pour freiner le débit de refoulement des moteurs 3 et/ou 4, ce qui est satisfaisant, puisque lesdits moteurs ne sont pas emballés, et ne fonctionnent pas en pompe, mais bien en moteurs.

Si, au contraire, le véhicule se déplace en descente, c'est le poids du véhicule qui entraîne, de sorte que les pompes 1 et 2 auront un débit insuffisant pour alimenter les moteurs 3 et 4. Ceux-ci fonctionneront en pompes, ce qui conduira à ce que le fluide des conduits 7 et 8 aura une pression faible. Le fluide contenu dans le conduit 30 aura une pression faible, insuffisante pour prédominer l'effet du ressort de rappel 22a, qui disposera l'étranglement mobile du limiteur 22 dans le sens menant à la restriction du passage entre les conduits 25 et 26. On crée de cette façon une gêne à l'écoulement du fluide des conduits 23, 24, qui s'échappe des moteurs 3 et 4, et on limite la vitesse desdits moteurs, donc du véhicule, dans le cas où, selon ce qui vient d'être dit, il y a baisse de pression dans les deux conduits ·d'admission 7 et 8 des moteurs.

Si les tiroirs des distributeurs 9 et 10 avaient été disposés entièrement à gauche, le fonctionnement aurait été identique au précédent, au sens de rotation près des moteurs 3 et 4 qui aurait été inversé.

On décrira encore le fonctionnement obtenu dans le cas particulièrement intéressant où, par exemple, par rapport à la disposition de la figure, on pousse vers la droite le tiroir du distributeur 35, de manière à alimenter par la pompe 1, la chambre du vérin 33 opposée à la tige dudit vérin, et où les tiroirs des distributeurs 9 et 10 sont tirés vers la droite, de manière à établir la communication entre les conduits 7 et 11, et, 8 et 12.

Dans ce cas, la quantité de fluide qui pénètre dans la chambre de gauche du vérin 33, opposée à la tige du vérin, est supérieure à celle qui est refoulée par le piston hors de la chambre située du côté de la tige du vérin, puisque la tige occupe un certain volume à droite du piston.

Si les pompes 1 et 2, comme cela a été supposé précédemment, sont capables d'assurer l'entraînement à vitesses linéaires égales des roues attelées aux moteurs 3 et 4 en l'absence de l'alimentation du vérin 33, elles deviennent incapables de continuer à assurer cet entraînement avec alimentation du vérin 33, si on n'ajoute pas au circuit une correction satisfaisante des débits.

En effet, en l'absence de dispositifs correcteurs, les moteurs 3 reçoivent un débit de fluide trop faible par rapport aux moteurs 4. Ils fonctionnent donc en pompes et freinent le véhicule.

Cet effet néfaste ne se produit pas avec la transmission décrite, car un dispositif correcteur a été prévu. En supposant le véhicule en terrain plat, ou en montée, donc effectivement entraîné par ses moteurs 3 et/ou 4, ou constate d'abord un manque de fluide refoulé dans le conduit 7 disposé en aval du distributeur 35 par rapport au fluide circulant dans le conduit 8. Mais on a prévu de pouvoir gaver l'un et/ou l'autre des conduits d'alimentation des moteurs 3 et 4, ici les conduits 11 et 12, en permettant au fluide du conduit 16, maintenu sous une certaine pression par le clapet de décharge 18, de s'ajouter au fluide des conduits 11 et 12, -dans le cas présent du seul conduit 11-, en étant véhiculé par le conduit 15 et en traversant le clapet de non-retour 17 correspondant. De cette manière, les moteurs 3 sont alimentés en fluide en quantité suffisante pour ne pas freiner le véhicule. Celui-ci n'est cependant entraîné que par les moteurs 4, car la pression du fluide d'alimentation des moteurs 3 est juste suffisante pour gaver lesdits moteurs, mais est trop faible pour leur faire fournir un travail moteur.

Quant au fonctionnement des restrictions 27 et 28, il est maintenu tel que déjà décrit : la pression étant grande dans le conduit 8, est également grande dans le conduit 30 et suffisante pour repousser l'organe de commande 22b de l'ouverture du limiteur de débit 33 et assurer l'établissement de la libre communication entre les conduits 25 et 26.

Il est important de remarquer que la valeur de la pression intermédiaire du fluide contenu dans le conduit 30 dépend, bien entendu, des valeurs des pressions du fluide dans les conduits 7 et 8, mais dépend également des dimensions des restrictions 27 et 28, et donc des valeurs des pertes de charges qui résultent de leur présence. Le choix judicieux des restrictions 27 et 28 procure donc une possibilité de réglage intéressante, qui permet, par exemple, de compenser une différence éventuelle des valeurs moyennes des pressions dans les conduits 7 et 8.

D'autre part, la commande de l'organe de commande 22b d'ouverture du limiteur de débit 22, ne comporte que des éléments fixes (restrictions 27, 28, et, conduits 30, 31, 32), qui ne s'usent pratiquement pas, ni ne se dérèglent. Ceci est un avantage significatif important.

8

L'invention n'est pas limitée à la description qui vient
d'en être donnée, mais en couvre au contraire toutes les variantes
qui pourraient lui être apportées sans sortir de son cadre, ni de
son esprit.

REVENDICATIONS

1 - Circuit de transmission de puissance au moyen d'un fluide sous pression, comprenant :

- une première (1) et une deuxième (2) source de fluide sous pression,

- un premier (3) et un deuxième (4) récepteur, reliés auxdites pompes, le premier récepteur (3) à la première pompe (1), et, le deuxième récepteur (4) à la deuxième pompe (2), par des premier (7) et deuxième (8) conduits d'alimentation distincts,

- un conduit d'échappement (25 - 26) commun aux deux récepteurs,

- un limiteur réglable de débit (22) disposé sur ce conduit d'échappement (25) commun, et,

- un dispositif de pilotage (27-28-29-30-31-32) de l'ouverture du limiteur de débit (22), qui est raccordé d'une part, aux conduits d'alimentation (7 et 8) des deux récepteurs, d'autre part, à l'organe de commande (22b) de l'ouverture du limiteur de débit (22), caractérisé en ce que ce dispositif de pilotage de l'ouverture du limiteur de débit est constitué par des premier (31-30) et deuxième (32-30) conduits de raccordement qui relient, respectivement, les premier (7) et deuxième (8) conduits d'alimentation à l'organe de commande (22b) de l'ouverture du limiteur de débit (22), et, par des première (27) et deuxième (28) restrictions, qui sont disposées sur les premier (31 - 30) et deuxième (32 - 30) conduits de raccordement, respectivement.

2 - Circuit selon la revendication 1, caractérisé en ce que chacun des premier et deuxième conduits de raccordement est constitué par un tronçon (31, 32) distinct de l'autre (32-30, 31-30) conduit de raccordement, raccordé au conduit d'alimentation correspondant (7, 8), et, par un tronçon commun (30) aux deux conduits de raccordement (31-30, 32-30), qui relie les deux tronçons distincts (31 et 32) à l'organe de commande (22b) de l'ouverture du limiteur de débit (22), cependant que les première (27) et deuxième (28) restrictions sont disposées, chacune, sur l'un (31) et l'autre (32) desdits tronçons distincts, respectivement.